# EUROPÄISCHE PATENTANMELDUNG

(11) **EP 2 886 020 A1**
(43) Veröffentlichungstag der Anmeldung: **24.06.2015**
(21) Anmeldenummer: 14176479.5
(22) Anmeldetag: 10.07.2014
(51) Int. Cl.: A47F 10/02, B65G 1/04

(54) **Logistiksystem für einen Modeladen**

(71) Anmelder: Freudenreich, Dorian, 10179 Berlin (DE)
(72) Erfinder: Freudenreich, Dorian, 10179 Berlin (DE)
(74) Vertreter: Schulz Junghans Patentanwälte PartGmbB

(57) **Zusammenfassung**

Ein Logistiksystem (1, 1') für einen Modeladen, umfassend ein Warenlager (3) mit einer Vielzahl von Kleidungsstücken (4), einen Anprobebereich (5) mit einer Vielzahl von Umkleidekabinen (9) und ein Transportsystem (7) zum Transport von im Warenlager (3) befindlichen Kleidungsstücken (4) in den Anprobebereich (5). Hierbei weist das Logistiksystem (1, 1') ein System (11) zur individuellen Anforderung von einem oder mehreren Kleidungstücken (4) aus dem Warenlager (3) in eine der Umkleidekabinen (9) auf. Das Transportsystem (7) umfasst eine Vielzahl von automatisierten Transporteinheiten (13) zum Entnehmen der individuell angeforderten Kleidungsstücke (4) aus dem Warenlager (3) und zu deren Transport in die Umkleidekabine (9), für welche die aus dem Warenlager (3) entnommenen Kleidungsstücke (4) angefordert wurden.

## Beschreibung

### Gebiet der Erfindung

Die vorliegende Erfindung ist auf ein Logistiksystem für Kleidungsstücke bzw. einen Modeladen gerichtet, der einen Anprobebereich, ein vorzugsweise davon räumlich getrenntes Warenlager mit einer Vielzahl von Kleidungsstücken und ein Transportsystem zum Transport von im Warenlager befindlichen Kleidungsstücken in den Anprobebereich umfasst.

### Stand der Technik

Üblicherweise werden in Modeläden bzw. -häusern Kleidungsstücke in einem Warenlager gelagert und durch Personal in einen Präsentations- bzw. Verkaufsbereich gebracht, um dort für Kunden ausgestellt zu werden. Die Kleidungsstücke können aus der Ausstellung entnommen und in Umkleidekabinen anprobiert werden. Dabei wird in vielen Fällen eine Vielzahl von Kleidungsstücken in verschiedenen Größen anprobiert.

Die Veröffentlichung WO 2007/041996 A1 offenbart ein Kaufhaus mit einem Lagerbereich, einem Präsentationsbereich und einem Fördersystem. Das Kaufhaus kann ebenfalls eine Darstellungseinrichtung mit Mitteln zum Reservieren oder Kaufen von dargestellten Waren umfassen. Obwohl diese Veröffentlichung Umkleidekabinen nennt, offenbart sie anscheinend keine ausführbare technische Lösung, um eine Vielzahl von Umkleidekabinen funktionell sinnvoll in ein Logistiksystem einzubinden. Vielmehr richtet sich die Veröffentlichung darauf, die Dekorationszeit bzw. den Dekorationsaufwand für einen Präsentationsbereich zu verkürzen. Ferner umfasst das vorgeschlagene Fördersystem einen Ringförderer, der auf Kleiderbügeln hängend gelagerte Kleidungsstücke transportiert und gleichzeitig das Lager des Kaufhauses bildet und somit die Waren einerseits transportiert und andererseits auch lagert. Zu diesem Zweck kann die Warendichte im Lagerbereich höher sein als im Präsentationsbereich, wozu der Verlauf des Förderbands im Präsentationsbereich großzügiger gestaltet ist als im Lagerbereich. Insbesondere offenbart der genannte Stand der Technik nicht, wie mit hinreichender Geschwindigkeit eine Vielzahl von Umkleidekabinen mit Kleidungsstücken individuell versorgt werden kann, vor allem angesichts der gemeinsamen Lagerung und dem gemeinsamen Transport der Kleidungsstücke durch das Fördersystem. Würde beispielsweise ein bestimmtes Kleidungsstück geordert, könnte dieses soeben den Ort des Interessenten passiert haben, sodass dieser entweder eine lange Zeit warten oder aber den Ort wechseln müsste, um Zugriff auf die gewünschte Ware zu erlangen. Die offenbarte Sortiereinrichtung kann die Erfordernisse eines großen Modehauses mit einer Vielzahl von Umkleidekabinen und spontan angeforderten Waren nicht hinreichend erfüllen. Ein schneller bzw. gleichzeitiger oder paralleler Zugriff auf eine Vielzahl von Kleidungstücken kann nicht gewährleistet werden.

Im Übrigen offenbart der genannte Stand der Technik auch keine Lösung für den Transport von Kleidungsstücken, die nicht auf Kleiderbügeln transportierbar sind (zum Beispiel Socken, Schuhe, Taschen usw.).

Ferner weist der Stand der Technik ebenfalls Nachteile im Bereich der Energieeffizienz auf. Das offenbarte System erfordert insbesondere, dass stets der gesamte Warenbestand mittels des offenbarten Ringförderers bewegt wird, wodurch große Mengen an Energie im Betrieb des Systems benötigt werden. Dies gilt unabhängig von der Anzahl an Interessenten und ist insbesondere bei einer zeitweise kleinen Anzahl von Interessenten ineffizient.

Schließlich ist das durch den genannten Stand der Technik offenbarte System auch hinsichtlich eines eingeschränkten Diebstahlschutzes verbesserungsfähig. Insbesondere kann der gesamte Lagerbestand vor den Augen eines Kunden passieren. Bei einer Vielzahl von Kunden und ebenfalls angesichts der hängenden Lagerung, kann die Sicherung der Kleidungsstücke nur aufwendig gewährleistet werden.

Zusammengefasst stellt das bekannte System ein wenig flexibles, kostenaufwendiges, nicht individuelles, unsicheres, träges und/oder in seiner Kapazität begrenztes System dar.

Aufgabe der Erfindung ist es daher, mindestens einen der obengenannten Nachteile zu überwinden.

Die Aufgabe der Erfindung kann auch darin bestehen, ein Logistiksystem für Kleidungsstücke, insbesondere in einem Modeladen (oder auch einen Modeladen an sich) bereitzustellen, das flexibel eine große Anzahl von Kleidungsstücken zur Anprobe an eine Vielzahl von Umkleidekabinen liefern und ggfs. wieder in Empfang nehmen kann. Dies soll bevorzugt individuell, zeit- und kosteneffizient ermöglicht werden.

### Offenbarung der Erfindung

Die obengenannte Aufgabe wird durch die Erfindung gemäß Anspruch 1 gelöst. Weitere bevorzugte Ausführungsbeispiele sind durch den Gegenstand der abhängigen Ansprüche und die im Folgenden genannten Ausführungsformen und Optionen gegeben.

Die Erfindung besteht somit in einem Logistiksystem für einen Modeladen, das ein Warenlager mit einer Vielzahl von Kleidungsstücken, einen Anprobebereich und ein Transportsystem zum Transport von im Warenlager befindlichen Kleidungsstücken in den Anprobebereich umfasst. Ferner weist der Anprobebereich eine Vielzahl von Umkleidekabinen auf, wobei das Logistiksystem weiterhin ein System zur individuellen Anforderung von einem oder mehreren Kleidungstücken aus dem Warenlager in eine der Umkleidekabinen umfasst. Erfindungsgemäß umfasst das Transportsystem zudem eine Vielzahl von automatisierten Transporteinheiten zum Entnehmen der individuell angeforderten Kleidungsstücke aus dem Warenlager und zum Transportieren in (genau) die Umkleidekabine, für welche die aus dem Warenlager entnommenen Kleidungsstücke angefordert wurden.

Durch diese Ausbildung des Logistiksystems können Kleidungsstücke zeiteffizient und individuell einer Vielzahl von Umkleidekabinen aus einem Warenlager zugeführt werden. Dabei erlaubt die erfindungsgemäße Verbindung zwischen Warenlager und Umkleidekabinen einen Zugriff zu jedem Zeitpunkt auf jegliche Lagerware. Das System ist zudem energie- und kosteneffizient, da die Anzahl an eingesetzten automatisierten Transporteinheiten sich nach dem aktuellen Bedarf richtet und nicht ständig das gesamte Warenlager bewegt wird. Wenn nur wenige Personen das Logistiksystem nutzen, so genügen wenige aktive Transporteinheiten. Dies unterscheidet das System zum Beispiel von Förderbandsystemen, in denen der Betrieb nach dem "Alles-oder-Nichts"-Prinzip erfolgt. Förderbänder müssen auch dann als Einheit aktiviert werden, wenn nur eine einzige Person Ware anfordert. Der Einsatz von Transporteinheiten vermeidet diese Verschwendung von Energie und die unnötige Abnutzung des Gesamtsystems. Zudem ist das vorgeschlagene Transportsystem flexibel um weitere Transporteinheiten erweiterbar, sodass in der Etablierungsphase eines Modeladens nur wenige Transporteinheiten eingesetzt werden können und später bei erhöhter Nachfrage weitere Transporteinheiten hinzufügbar sind.

Im Gegensatz zu anderen Förderern, wie z.B. Förderbändern, kann eine ausgefallene Transporteinheit einfach ersetzt werden. Das System ist demnach durch die Verwendung von einer Vielzahl an Transporteinheiten sehr ausfallsicher. Personal wird nur in eingeschränktem Maße benötigt. Ein weiterer Vorteil kann darin bestehen, dass ein Präsentationsbereich vollständig entfallen kann und somit nicht mehr mit Ware bestückt werden muss.

Optional sind das Warenlager und der Anprobebereich voneinander räumlich getrennt, zum Beispiel beabstandet und/oder durch mindestens eine Wand getrennt. Zum Beispiel befindet sich keiner der beiden Bereiche innerhalb des jeweils anderen. Dies kann insbesondere auch den Diebstahlschutz weiter verbessern und den Zugriff von nichtautorisierten Personen auf einen großen Teil des Warenbestands verhindern.

In einer bevorzugten Ausführungsform der Erfindung weist das Transportsystem eine Vielzahl von selbstangetriebenen Transportshuttles und/oder -robotern auf. Diese können sich zum Beispiel mittels aufladbarer Batterien (Akkus) bewegen und/oder Strom aus einem Führungssystem beziehen. Solch ein System kann zum Beispiel stromführende Leitungen und/oder Schienen bzw. ein Schienennetz umfassen, beispielsweise ein Schienennetz, wie es an anderen Stellen dieser Anmeldung beschrieben wird.

Es besteht allerdings im Allgemeinen auch die Möglichkeit, Transporteinheiten bzw. Transportroboter zu nutzen, die ohne ein Schienennetz und/oder frei durch den Raum bewegbar sind. Solche Transportroboter könnten dann ebenfalls die Umkleidekabinen mit der gewünschten Ware ansteuern und die nicht gewünschte Ware wieder dem Lager zuführen. Hierdurch ist eine erhöhte Flexibilität im räumlichen Aufbau des Anprobebereichs und der Lagergestaltung gegeben.

Optional können Transporteinheiten und/oder eine (übergeordnete) Steuerungseinheit erkennen, wenn eine Transporteinheit nicht (mehr) beladen ist und dann Kleidungsstücke, die von einem Kunden in einer Umkleidekabine zurückgegeben wurden, wieder abzutransportieren. Dies kann bevorzugt durch eine geeignete Kennzeichnung von Kleidungsstücken und/oder von die Kleidungsstücke beinhaltende Verpackungen, zum Beispiel Behälter, erfolgen - beispielsweise mittels eines RFID Signals (bzw. Codes), das signalisiert, wenn Ware vom Kunden wieder zurückgegeben wurde. Auch Systeme, die selbständig nach einem kürzesten Transportweg suchen oder einen Stau auflösen können, können vorteilhaft eingesetzt werden (wie z.B. der Transportroboter ARC3 der Firma Servus Intralogistics). Die Ausführungen hier beschränken sich aber nicht auf solche Systeme.

In einer weiteren bevorzugten Ausführungsform der Erfindung umfasst das System zur individuellen Anforderung von einem oder mehreren Kleidungstücken in jeder Umkleidekabine jeweils eine oder mehrere Benutzerschnittstellen zur Anforderung von einem oder mehreren Kleidungsstücken in diese Umkleidekabine. Zum Beispiel kann ein Touchscreen als Benutzerschnittstelle dienen. Mit anderen Worten kann jede Umkleide eine oder mehrere Datenverarbeitungseinrichtungen wie einen PC oder ein Tablet umfassen, mittels dem aus der Umkleidekabine Kleidungsstücke durch eine Person angefordert werden können. Die Benutzerschnittstelle kann alternativ oder zusätzlich auch Mittel zur Sprachsteuerung und/oder zur drahtlosen Übermittlung von Informationen umfassen. Eine Person muss zum Auswählen oder Anfordern der Ware die Umkleidekabine nicht verlassen, unabhängig davon wie viele Kleidungsstücke sie anschauen oder anprobieren möchte. Ebenso ist es im Allgemeinen möglich, dass das System eine Internetschnittstelle (z. B. App, Internetseite, Soziales Netzwerk) umfasst mittels der Personen bereits vor Betreten des Ladens eine Auswahl an Kleidungsstücken, die sie im Laden anprobieren möchten, treffen und diese ggfs. reservieren können. Sie können dann, bevorzugt nach Betreten einer Umkleidekabine, die zuvor getroffene Auswahl anfordern und sparen somit Zeit bei Auswahl und Einkauf. Hierzu kann sich die betreffende Person zum Beispiel mit persönlichen Zugangsdaten identifizieren. Zudem werden Umkleidekabinen weniger lange blockiert, wenn Personen bereits vor Betreten des Modeladens eine erste Auswahl treffen. Die Anlieferung der ausgewählten Waren in die Umkleidekabine kann direkt nach Anforderung durch die Person in der Umkleidekabine mittels automatisierter Transporteinheiten erfolgen.

Eine Benutzerschnittstelle kann mit einer Steuereinheit zum Übermitteln einer durch die Benutzerschnittstelle angeforderten Waren- bzw. Kleidungsstückliste an eine oder mehrere Transporteinheiten verbunden sein. Die Transporteinheiten können Befehle von der Steuereinheit zum Beispiel mittels drahtloser Signalübermittlung erhalten. Die Transporteinheiten können dann die Ware oder Kleidungsstücke selbsttätig aus dem Lager entnehmen und zur anfordernden Umkleidekabine transportieren. Nach Ansicht oder Anprobe kann die Ware erneut einer Transporteinheit übergeben und wahlweise (zum Beispiel durch Angabe über die Benutzerschnittstelle) zurück in das Warenlager oder in einen Bezahl- und/oder Abholbereich transportiert werden. Bevor Ware von der Umkleide in das Warenlager gesendet wird, kann Sie optional auch noch zu einer Prüfstation, Bügelstation und/oder Faltstation gesendet werden. Dort können Kleidungsstücke zum Beispiel durch Personal geprüft (zum Beispiel mittels Sichtprüfung), gebügelt und/oder erneut gefaltet werden. An einer solchen Station könnte zudem entnommene Ware nachgefüllt oder neue Ware dem System zugeführt werden.

Ferner kann eine Benutzerschnittstelle Anzeigemittel (zum Beispiel Bildschirm, Touchscreen, etc.) umfassen und dazu ausgebildet sein, dem Kunden darauf Vorschläge für alternative oder stilistisch passende Kleidungsstücke zu unterbreiten. Ebenfalls können getragene Kleidungsstücke an Personen gezeigt oder detaillierte Informationen zu der Ware angezeigt werden (wie zum Beispiel Größe Farbangabe, Preis, Rabatt, Angaben zur Wasch- oder Reinigbarkeit, Hersteller, Marke, Garantie, Gewährleistung, Umtauschbarkeit, verfügbare weitere Größen, verfügbare weitere Farben).

Informationen, die von den Kunden über die Benutzerschnittstelle und durch das Verhalten in der Kabine gesammelt werden, könnten genutzt werden, um das Kundenverhalten zu analysieren und zum Beispiel das Waren- und Serviceangebot zu verbessern. Zu diesem Zweck können die von Benutzern dem Informationssystem zur Verfügung gestellten Daten einer Analyseeinheit des Logistiksystems zugesandt werden, die dazu dienen kann, der Person in der Kabine personalisierte Vorschläge zu unterbreiten. In einer solchen Analyseeinheit verwendete Routinen sind dem Fachmann bekannt. Eine Vorauswahl an Waren, die durch Personen zum Beispiel über ein internetbasiertes System von außerhalb des Ladens getroffen wird, kann genutzt werden, um das Warenlager daran angepasst bzw. optimiert zu bestücken. Stellt sich beispielsweise heraus, dass ein bestimmtes Kleidungsstück sehr häufig zum Anprobieren bzw. Anschauen im Laden ausgewählt wird, so kann der Vorrat an diesem Kleidungsstück im Warenlager erhöht werden.

Die Kabinen können zum Beispiel über ein internetbasiertes System auch reservierbar sein, sodass Kunden (beispielsweise gegen Kauf eines Warengutscheins) einen bestimmten Zeitraum an einem Tag ihrer Wahl für sich reservieren können. Je nach Auslastung des Ladens kann die Zeit, die ein Kunde in einer Umkleidekabine verbringt, begrenzt werden, beispielsweise durch automatische Türöffnung, wie etwa nach Einspielen eines Signaltons oder durch den Hinweis eines Kundenberaters, der die Umkleidekabine nach einem bestimmten Zeitpunkt aufsucht. Ebenfalls könnte die Funktionsfähigkeit der Benutzerschnittstelle nach einiger Zeit blockiert werden, sodass einem Kunden keine andere Wahl bleibt, als die Umkleidekabine zu verlassen.

Mittels der Benutzerschnittstelle können Personen in der Umkleidekabine optional auch Bewertungen an eine Bewertungseinheit des Logistiksystems abgeben. Diese Bewertungen können zum Beispiel auf die Ware (z.B. zu Qualität, Passform oder Stil), den Umfang des Angebots, die Lieferung der Ware oder die Qualität von Kundenberatern gerichtet sein.

Die Benutzerschnittstelle kann optional ebenfalls ermöglichen, einen oder mehrere Kundenberater in die Umkleidekabine anzufordern, beispielsweise, um die Passform eines Kleidungsstücks bewerten zu lassen. Hierbei könnte die Benutzerschnittstelle beispielsweise ermöglichen, den Berater auszuwählen, zum Beispiel in Abhängigkeit eines Bildes, eines bevorzugten Stils, des Geschlechts, des Alters oder nach beraterspezifischem Wissen (z. B. spezialisiert auf Herren-Anzüge). Hierdurch können Kosten gespart werden, da Kundenberater nicht mehr in allen Flächen vorgehalten werden müssen, sondern je nach Bedarf und Nachfrage einsetzbar sind. Gemäß einer weiteren bevorzugten Ausführungsform ist das Transportsystem derart ausgebildet, dass jede der Umkleidekabinen individuell durch eine oder mehrere, insbesondere durch alle, der Transporteinheiten ansteuerbar ist.

In einer weiteren bevorzugten Ausführungsform ist jedes der Kleidungsstücke und/oder eine das jeweilige Kleidungsstück beinhaltende Verpackung, insbesondere ein Behälter, wie zum Beispiel eine Box, durch einen individuellen Code gekennzeichnet. Dieser kann zumindest einen der folgenden Parameter in Bezug auf das Kleidungsstück umfassen: Größe, Farbangabe, Lagerungsort im Warenlager, Preis, Rabatt, Angaben zur Wasch- oder Reinigbarkeit, Hersteller, Marke, Garantie, Gewährleistung, Umtauschbarkeit, verfügbare weitere Größen, verfügbare weitere Farben. Zum Beispiel kann jedes Kleidungsstück mit einem RFID Code versehen werden und mit den dieses Kleidungsstück beinhaltenden Behältern "gematched" werden. Die Behälter könnten ihrerseits einen RFID Code tragen. Weitere Beispiele für die Kennzeichnung von Kleidungstücken und Behältern sind Barcodes, QR Codes und GPS Tracker. Mittels einer Kennzeichnung der Kleidungsstücke und/oder der Behälter können Kleidungsstücke gezielt dem Lager entnommen werden und einer spezifischen Umkleidekabine zugeführt werden. Hierbei kann die Kennzeichnung auch der Diebstahlsicherung dienen. Man könnte für jede Umkleidekabine individuell nachvollziehen, welche Kleidungsstücke zugeführt wurden, welche Kleidungsstücke zurückgegeben wurden und welche Kleidungsstücke nach Verlassen der Kabine bezahlt werden müssen. So kann das System zur individuellen Anforderung von Kleidungsstücken auch zur Bezahlung der Kleidungsstücke ausgebildet sein.

Alternativ oder zusätzlich können die Umkleidekabinen mit Detektoren bzw. Sensoren bestückt sein, die gekennzeichnete Ware erkennen und dem Kunden, der Steuereinheit und/oder der Analyseeinheit eine oder mehrere der folgenden Informationen mitteilen: Größe Farbangabe, Lagerungsort im Warenlager, Preis, Rabatt, Angaben zur Wasch- oder Reinigbarkeit, Hersteller, Marke, Garantie, Gewährleistung, Umtauschbarkeit, verfügbare weitere Größen, verfügbare weitere Farben, wie viele Warenstücke er aus der Kabine mitnimmt, Gesamtpreis.

Diese oder andere Sensoren, zum Beispiel in Türnähe einer Umkleidekabine, können ebenfalls genutzt werden, um den Kunden Zugang zu den Kabinen zu gewähren. So könnte jedem Kunden bei Betreten des Ladens eine Kabine zugewiesen werden. Damit kann einerseits erreicht werden, dass Kunden schnell eine freie Kabine finden und andererseits ermöglicht dies einen Kunden in eine bestimmte Kabine zu führen, beispielsweise in eine Premium-Kabine für Premium-Kunden, in große Kabinen für Personen mit Kinderwagen, in Doppel- oder Dreierkabinen für Paare oder kleine Personengruppen, etc.. Bei Zuweisung der Kabine könnte der Kunde einen RFID Chip, eine Karte (z.B. Kaba System), einen QR Code, o.ä. erhalten, damit die Tür sich öffnet, wenn der Kunde die Umkleidekabine erreicht hat. Aus Kostengründen aber auch aus technischen Gründen könnte es hierbei von Vorteil sein, wenn für Waren- bzw. Verpackungskennzeichnung und Türöffnung das gleiche System (beispielsweise RFID) verwendet wird.

In einer weiteren bevorzugten Ausführungsform der Erfindung wird zumindest ein Teil der Kleidungsstücke im Warenlager in Behältern, insbesondere Boxen, aufbewahrt, die durch die Transporteinheiten dem Warenlager entnehmbar und zu einer Umkleide transportierbar sind. Verpackung und insbesondere Behälter können (permanente) Öffnungen aufweisen, zum Beispiel auf ihrer Oberseite offen sein. Die Transporteinheiten können Behälter auch wieder in den Umkleidekabinen aufnehmen. Hierzu können die Transporteinheiten an sich über ein Fördersystem bzw. ein System zur Übergabe von Kleidungsstücken oder die Kleidungsstücke beinhaltende Behälter verfügen. Diese Behälter können in einer weiteren vorteilhaften Ausführungsform in mehrstöckigen Regalen des Warenlagers gelagert werden. Hierdurch kann eine hohe Warendichte erreicht werden.

Wird die Kleidung in Behältern gelagert bzw. transportiert, kann der Person in der Umkleide zum Beispiel der Behälter samt Kleidungsstück oder nur das Kleidungsstück zur Verfügung gestellt werden, je nachdem, wie das Übergabe- bzw. Fördersystem aufgebaut ist. Wenn das Kleidungsstück nicht gefällt oder nicht passt, kann es erneut an das Transportsystem, das heißt an eine Transporteinheit, übergeben werden. Hier besteht erneut die Möglichkeit, das Kleidungsstück mitsamt einem Behälter oder nur die Kleidung an eine Transporteinheit zu übergeben.

In einer weiteren bevorzugten Ausführungsform umfasst das Transportsystem ein Schienennetz zum Führen der Transporteinheiten. Ein solches Schienennetz kann zumindest abschnittsweise eine Einhausung der Schienen umfassen, sodass sich die Transporteinheiten auf den Schienen, innerhalb der Einhausung bewegen können. Diese Einhausung kann auch als Schacht, Tunnel oder Kanal bezeichnet werden. Der Querschnitt eines solchen kann zum Beispiel rechteckig oder rund sein, aber auch andere Querschnitte aufweisen. Das Schienennetz kann ebenfalls flexibel erweitert oder umgebaut werden, insbesondere angesichts der vorhandenen Kundennachfrage. Das Transportsystem kann derart ausgeführt sein, dass Anlieferung und Abholung von demselben System ausgeführt werden, oder aber, dass Anlieferung und Abholung von verschiedenen Systemen ausgeführt werden.

Ein Schienennetz zum Führen der Transporteinheiten kann zum Beispiel zumindest im Anprobebereich kopfüber bzw. oberhalb von 1,8 m, vorzugsweise oberhalb von 2,0 m, in einem doppelten Boden bzw. unterirdisch angeordnet sein. Durch eine derartige Anordnung stört das Schienensystem nicht den Zugang zu oder die Bewegung in den Umkleidekabinen.

Alternativ oder zusätzlich stellt eine zumindest teilweise Einhausung des Schienennetzes, zum Beispiel zumindest im Anprobebereich bzw. im Bereich der Umkleidekabinen sicher, dass Kunden nicht direkt in das System "eingreifen" können. Dadurch werden zum einen der Diebstahlschutz und zum anderen die Personensicherheit verbessert.

In einer weiteren Ausführungsform können in einem Modeladen auch gleichzeitig mehrere Schienennetze in unterschiedlicher Höhe angebracht werden, um für Personen von verschiedener Größe bequem nutzbar zu sein. Kunden könnten, zum Beispiel bei Betreten des Modeladens, entsprechend ihrer Körpergröße und/oder ihres Wunsches, eine Umkleidekabine mit passender oder bevorzugter Schienennetzhöhe zugewiesen werden.

Zusätzlich können mehrere Schienennetze zur Herstellung einer Redundanz vorgesehen werden. So könnte ein erster Teil des Anprobebereichs, umfassend einen ersten Teil der Umkleidekabinen, durch ein erstes Schienennetz an das Warenlager angebunden sein und ein zweiter Teil des Anprobebereichs, umfassend einen zweiten Teil von Umkleidekabinen, durch ein zweites Schienennetz an das Warenlager angebunden sein. Beide Netze wären in diesem Fall unabhängig voneinander, könnten jedoch auf das gleiche Warenlager zugreifen. Somit könnte der Laden selbst bei größeren technischen Problemen im Transportsystem weiterhin nutzbar bleiben. Eine höhere Redundanz und Schnelligkeit des Systems kann durch weitere zusätzliche Schienennetze (mehr als zwei) mit Anschluss an das Warenlager erreicht werden. Es ist im Allgemeinen möglich, dass ein Schienennetz Ausweichoder Parkbuchten für Transporteinheiten aufweist. Weiterhin können mehrere Schienennetze auch mindestens eine (Quer)-Verbindung umfassen, sodass Transporteinheiten von einem Netz in ein weiteres Netz transportierbar sind. Eine solche Verbindung könnte zum Beispiel mittels eines Aufzugs und/oder einer Weiche hergestellt werden.

In einer weiteren bevorzugten Ausführungsform weisen die Umkleidekabinen (in ihrem Inneren) jeweils mindestens eine Warenübergabeschnittstelle zum Beund/oder Entladen der Transporteinheiten auf. Mit anderen Worten kann diese Schnittstelle das Transportsystem mit einem Zugriffsbereich für eine Person in der Umkleidekabine verbinden.

In einer weiteren bevorzugten Ausführungsform der Erfindung weisen die Umkleidekabinen und/oder die Warenübergabeschnittstellen jeweils mindestens eine Öffnung zum Be- und Entladen der Transporteinheiten oder zum Führen der Transporteinheiten in die Umkleidekabinen auf. Die Öffnung kann zum Beispiel oberhalb von 1,8 m, vorzugsweise oberhalb von 2,0 m oder sogar oberhalb von 2,1 m der jeweiligen Kabine angeordnet sein oder auch im Boden bzw. in Bodennähe der Umkleidekabine angeordnet sein, falls das Schienennetz zumindest im Anprobebereich in Bodennähe bzw. in einem doppelten Boden oder unterirdisch angeordnet ist.

Um zum Beispiel eine Übergabe mit verbesserter Sicherheit zu ermöglichen, können Kleidungstücke oder die Kleidungsstücke beinhaltende Verpackungen über Führungsmittel in einer Umkleide von einer Transporteinheit einer Person in der Umkleide zugeführt werden. Umgekehrt können solche Mittel dazu dienen, eine Übergabe von Kleidungsstücken oder die Kleidungstücke beinhaltene Verpackungen von einer Person in der Umkleide an eine abholende Transporteinheit zu übergeben. Daher umfassen die Umkleidekabinen in einer weiteren bevorzugten Ausführungsform jeweils Mittel zum Führen von Kleidungstücken oder die Kleidungstücke beinhaltente Verpackungen zwischen der Öffnung und einem Zugriffsbereich in der Umkleidekabine. Solche Mittel können zum Beispiel eine Vielzahl von parallel in einer schiefen Ebene angeordneten Rollen, hier auch "Rollenteppich" genannt, ein Förderband oder einen Aufzug umfassen. Zusätzlich oder alternativ kann die Warenübergabe, bzw. die Anlieferung und/oder Abholung der Kleidungsstücke, beispielsweise über Kippvorrichtungen, Ausfallvorrichtungen oder Ausschübe erfolgen.

Wenn das Transportsystem Transportroboter umfasst, die sich selbstfahrend (und unabhängig von Schienen) frei im Raum bewegen können, besteht die Option, diese Transportroboter mit einer Sensorik zur Sicherstellung der Personensicherheit auszurüsten. Alternativ oder zusätzlich könnten Transportroboter ebenfalls geeignete Annahme- und Rückgabestellen zur Warenübergabe (zum Beispiel die obengenannten) als Warenübergabeschnittstellen mit den Kunden verwenden.

In einer weiteren bevorzugten Ausführungsform umfasst das Logistiksystem pro Umkleidekabine mindestens einen Rückgabepufferbereich, in dem durch den Benutzer der Umkleidekabine zurückzugebene Waren ablegbar sind, um zu einem späteren Zeitpunkt durch eine Transporteinheit an bzw. in der Umkleidekabine abgeholt und abtransportiert zu werden. Alternativ oder zusätzlich kann das Transportsystem pro Umkleidekabine mindestens einen Annahmepufferbereich umfassen. Diese Bereiche können ein Teil der Warenübergabeschnittstelle sein und optional auch die hierin genannten Führungsmittel umfassen.

Durch einen oder mehrere Pufferbereiche können die Ressourcen des Transportsystems effizienter genutzt werden. So können die Transporteinheiten Kleidungsstücke und/oder Verpackungen anliefern, ohne dass eine Person diese in der Umkleide aktiv abnehmen muss. Umgekehrt muss die Person bei der Rückgabe der Ware nicht auf eine verfügbare Transporteinheit warten oder es muss keine Transporteinheit an der Umkleide vorgehalten werden. Eine verfügbare (zum Beispiel sich in der Nähe befindende) Transporteinheit kann die Kleidungsstücke und/oder auch leere Verpackungen bzw. Behälter dem Rückgabepufferbereich entnehmen und wieder dem Lager zuführen.

In einer weiteren Ausführungsform können eine oder mehrere Umkleidekabinen mit einer Sensorik zum Auslesen und/oder Registrieren der in die Kabine transportierten oder aus der Kabine transportierten Kleidungsstücke ausgestattet sein. Diese Sensorik kann zum Beispiel einen Code lesen, der an den Kleidungsstücken oder deren Verpackung, zum Beispiel Behälter, angebracht ist. Es kann sich dabei zum Beispiel um einen Barcode, QR-Code oder um einen RFID-Code handeln. Somit ist zu jedem Zeitpunkt ersichtlich, welche Kleidungsstücke sich in welcher Umkleidekabine befinden. Hiermit kann ebenfalls gesteuert werden, wie viele Teile ein Kunde maximal anfordert und wann eine Transporteinheit Kleidungsstücke oder leere Behälter wieder ins Lager zurückführen soll. Gleichzeitig kann dieses System dem Diebstahlschutz dienen, da zu jedem Zeitpunkt bekannt ist, welche Kleidungsstücke eine Person zurzeit in einer Umkleide hat. Ferner können Kleidungsstücke durch diese Kennzeichnung direkt in der Umkleide bezahlt werden, wenn eine entsprechende Signalisierung vom Kunden an die Benutzerschnittstelle erfolgt. Eine mit der Benutzerschnittstelle verbundene Recheneinheit (zum Beispiel eine zentrale Recheneinheit) kann dann ermitteln, welche Ware vom Kunden in der Kabine zurückgehalten wurde und gibt optional den Preis für diese Ware an. Mit bekannten Systemen (zum Beispiel mittels eines Automaten, Online-Überweisung, EC Karte, Kreditkarte, Barzahlung) könnte der Kunde dann den geforderten Betrag begleichen.

Umkleidekabinen können optional jeweils auch ein Türsicherungssystem bzw. eine Türsensorik umfassen, die derart ausgebildet ist, dass sich eine Tür der jeweiligen Umkleidekabine nur dann öffnen lässt, wenn entweder alle sich in der Umkleidekabine befindlichen Kleidungsstücke bezahlt oder aber an das Transportsystem zurückgegeben wurden. Eine Tür kann in diesem Fall natürlich auch mit einem Flucht- bzw. Notfallmechanismus ausgestattet sein. Diese Türsensorik kann mit einer zentralen Recheneinheit des Systems zur individuellen Anforderung von Kleidungsstücken verbunden sein und so über die gelieferten und sich in der Kabine befindlichen und/oder bereits wieder abtransportierten Kleidungsstücke informiert sein.

Grundsätzlich kann zusätzlich oder alternativ jede Umkleide eine Sensorik umfassen, die dazu ausgebildet ist, festzustellen welche Kleidungsstücke sich tatsächlich zu einem Zeitpunkt in der Umkleide befinden. Zu diesem Zweck oder grundsätzlich können an den Kleidungstücken, vorzugsweise an allen Kleidungstücken und/oder deren Verpackungen RFID-Tags bzw. RFID-Transponder vorgesehen werden und das Logistiksystem kann entsprechende RFID-Lesegeräte aufweisen (zum Beispiel im Bereich der Annahme- und Rückgabepuffer).

Mit anderen Worten können im Logistiksystem Kleidungsstücke und/oder deren Verpackungen jeweils durch einen Code individuell gekennzeichnet sein und das Logistiksystem und/oder die Umkleidekabinen eine Sensorik, insbesondere basierend auf RFID oder Kaba, umfassen und zwar zur automatischen Entriegelung einer Tür einer Umkleidekabine, falls entweder alle sich in dieser Umkleidekabine befindlichen Kleidungsstücke bezahlt wurden oder durch eine Person in dieser Umkleidekabine signalisiert wurde, dass sie den Einkauf bzw. die Anprobe abgeschlossen hat. Ferner kann die Sensorik zum Geschlossenhalten der Tür ausgebildet sein, solange sich noch unbezahlte Kleidungsstücke in dieser Umkleidekabine befinden oder die Person in dieser Umkleidekabine noch nicht signalisiert hat, dass sie den Einkauf bzw. die Anprobe abgeschlossen hat.

Schließlich kann die Erfindung ebenfalls auf einen Modeladen mit einem Logistiksystem gemäß einer der obengenannten Ausführungsformen gerichtet sein. Der Begriff Modeladen umfasst dabei insbesondere auch ein Modehaus, ein Modegeschäft, ein Kaufhaus und andere Läden oder Geschäfte, die unter anderem Mode bzw. Kleidung anbieten.

Das Logistiksystem lässt sich somit in einem Neubau bereitstellen oder in einer existierenden Struktur integrieren, beispielsweise einer existierenden Kaufhausetage. Das Warenlager kann sich zum Beispiel auf der gleichen Etage wie die Umkleidekabinen oder auch in einer anderen Etage (beispielsweise im Keller, im Dachgeschoss oder in einem angeschlossenen Warenlager) befinden. Die Verbindung zu Umkleidekabinen in einer anderen Etage kann dann zum Beispiel mittels Aufzügen hergestellt werden, über die die Transporteinheiten mit oder ohne Ware von einer Etage in die andere Etage überführbar sind.

Ferner kann die Erfindung ebenfalls auf ein Verfahren zur Anforderung und Lieferung und/oder Rückgabe von Kleidungsstücken gerichtet sein, welches zumindest einen oder mehrere der folgenden Schritte umfasst: Reservieren von einem oder mehreren Kleidungsstücken durch einen Kunden mittels einer Internetschnittstelle; Identifizierung des Kunden in einem Anprobebereich und/oder einer Umkleidekabine; Anfordern von einem oder mehreren Kleidungsstücken in eine Umkleidekabine eines Anprobebereichs durch den Kunden mittels einer Benutzerschnittstelle; Transport der angeforderten Kleidungsstücke aus einem Warenlager mittels automatisierter Transporteinheiten in die Umkleidekabine, für die die Kleidungsstücke angefordert wurden; Prüfen mittels einer Sensorik, insbesondere RFID, welche Kleidungsstücke sich in der Umkleidekabine befinden; Öffnen einer Tür der Umkleidekabine in Abhängigkeit von der sich in der Umkleidekabine befindlichen Kleidungsstücke bzw. des Bezahlstatus der sich in der Umkleide befindlichen Kleidungsstücke; Abtransport zurückgegebener Kleidungsstücke durch automatisierte Transporteinheiten aus der Umkleidekabine in das Warenlager; Prüfen bzw. Transportieren von zurückgegebenen Kleidungsstücken in einer bzw. in eine Falt-, Bügel- und/oder Prüfstation vor oder nach Transport in das Warenlager.

Sämtliche Merkmale der obengenannten Ausführungsformen können miteinander kombiniert oder gegeneinander ausgetauscht werden.

### Kurze Beschreibung der Figuren

Im Folgenden werden kurz die Figuren der Ausführungsbeispiele beschrieben. Weitere Details sind der detaillierten Beschreibung der Ausführungsbeispiele zu entnehmen. Es zeigen:
- Figur 1: ein schematisches Schaltbild eines Logistiksystems gemäß einer bevorzugten Ausführungsform;
- Figur 2: eine schematische perspektivische Ansicht eines Modeladens mit Logistiksystem gemäß einer bevorzugten Ausführungsform;
- Figur 3: eine schematische perspektivische Ansicht einer Umkleidekabine gemäß einer bevorzugten Ausführungsform; und
- Figur 4: eine schematische Seitenansicht eines Regalsystems eines Warenlagers gemäß einer bevorzugten Ausführungsform.

### Detaillierte Beschreibung der Ausführungsbeispiele

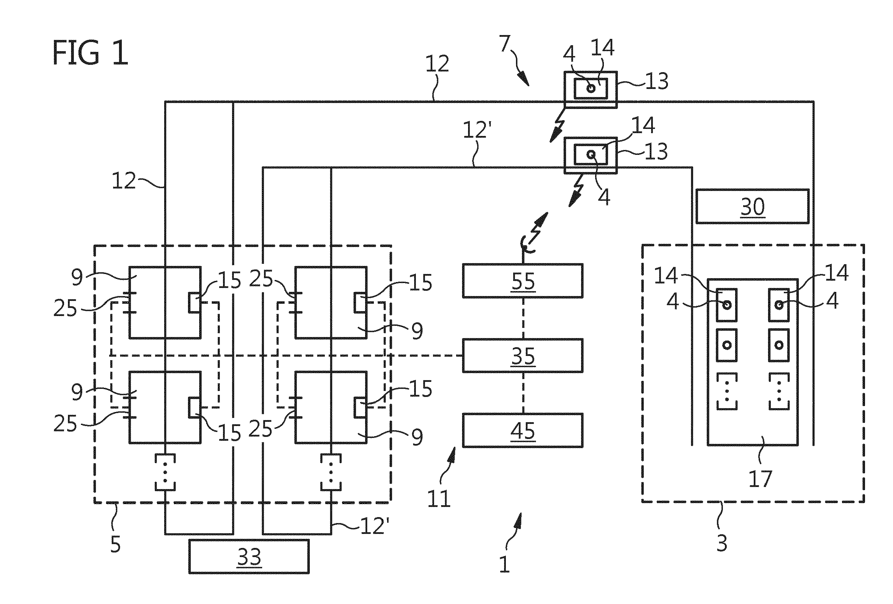

Die Figur 1 zeigt ein schematisches Schaltbild eines Logistiksystems 1 gemäß einem erfindungsgemäßen Ausführungsbeispiel.

Das dargestellte System 1 umfasst zwei, vorzugsweise voneinander getrennte Bereiche in Form eines Anprobebereichs 5 und eines Warenlagers 3. Diese beiden Bereiche 3, 5 werden im dargestellten Ausführungsbeispiel lediglich durch das Transportsystem 7 miteinander verbunden. Das dargestellte Transportsystem 7 umfasst ein Schienensystem mit Schienennetzen 12, 12' und eine Vielzahl von Transporteinheiten 13, mit deren Hilfe die Umkleidekabinen 9 im Anprobebereich 5 mit einem Regalsystem 17 im Warenlager 3 zum Transport von Kleidungsstücken 4 verbunden werden. Über Benutzerschnittstellen 15 in den Umkleidekabinen 9 können Kleidungsstücke 4 individuell für eine Umkleidekabine 9 angefordert und durch die Transporteinheiten 13 aus dem Warenlager 3 gezielt in genau die Umkleidekabine 9 transportiert werden, aus der die Kleidungstücke 4 angefordert wurden.

Im dargestellten Beispiel umfasst das Schienensystem zwei voneinander unabhängig betreibbare Schienennetze 12, 12', mittels der sich Transporteinheiten 13 bzw. Transportshuttles 13 bewegen, um Kleidungsstücke 4 zwischen dem Warenlager 3 und den Umkleidekabinen 9 zu transportieren. Jeweils eines der Schienennetze 12, 12' ist somit mit jeweils einer Gruppe von Umkleidekabinen 9 verbunden. Somit kann eine Redundanz geschaffen werden, durch die eine Störung an kritischer Stelle im Schienennetz 12, 12', zum Beispiel nahe des Warenlagers 3 nicht zu einem Ausfall der Transportfähigkeit des gesamten Systems 7 führt. In diesem Fall wäre das zweite Schienennetz und somit die weitere Gruppe von Umkleidekabinen 9 nach wie vor nutzbar. Insbesondere führt an jeder der Umkleidekabinen 9 mindestens ein Schienennetz 12, 12' vorbei bzw. durch diese hindurch. Der Übersicht halber sind lediglich vier Umkleidekabinen 9 dargestellt, von denen jeweils zwei mittels eines der Schienennetze 12, 12' durch die Transporteinheiten 13 anlaufbar sind. Um durch die sich auf den Schienen bewegenden Transporteinheiten 13 transportiert zu werden, werden die Kleidungsstücke 4 bevorzugt in Behältern oder Boxen 14 in Regalen des Regalsystems 17 gelagert, sodass die Transporteinheiten oder -shuttles 13 die Behälter oder Boxen 14 automatisiert, d.h. ohne menschliche Unterstützung aus dem Warenlager 3 in die Umkleidekabinen 9 bewegen können. Gleichermaßen sind die Behälter 14 dort auch wieder durch die Transporteinheiten 13 ablegbar.

Optional kann das Schienensystem auch an einer Falt- bzw. Bügelstation 30 vorbeigeführt sein, wo Kleidungstücke 4 erneut gefaltet und/oder gebügelt werden können. Alternativ oder zusätzlich kann dort ebenfalls eine Sichtprüfung der Kleidungstücke 4 durchgeführt werden, zum Beispiel um zu vermeiden, dass Kleidungsstücke 4 mit mangelhafter Qualität dem Warenlager 3 zugeführt werden.

Die Benutzerschnittstellen 15 sind bevorzugt Teil eines Systems 11 zur individuellen Anforderung von Waren bzw. Kleidungstücken 4 und können mit einer zentralen Recheneinheit 35 (zum Beispiel einem Server) des Systems 11 verbunden sein. Alternativ oder zusätzlich können eine oder mehrere der Benutzerschnittstellen 15 ebenfalls selbst eine Recheneinheit bzw. Computereinheit umfassen (zum Beispiel einen Computer, Client und/oder ein Tablet). Ferner können die zentrale Recheneinheit 35 und/oder die Benutzerschnittstellen 15 mit den Transporteinheiten 13 zum Informationsaustausch in Verbindung stehen (vorzugsweise über eine drahtlose Verbindung). Vom Kunden über die Benutzerschnittstelle 15 bereitgestellte Informationen (zum Beispiel eine Anforderung von Kleidungsstücken 4 oder andere hierin genannte Eingaben) können an die zentrale Recheneinheit 35 gesendet werden. Somit können Informationen über die Anforderung von Kleidungsstücken von der Benutzerschnittstelle 15 an die Transporteinheiten 13 gesendet werden.

Insbesondere kann eine Organisation mehrerer Transporteinheiten 13 durch eine Steuereinrichtung bzw. -einheit 55 erfolgen, die zum Beispiel über Informationen bezüglich der Aufenthaltsorte und/oder der Beladung der Transporteinheiten 13 verfügt. Alternativ könnten die Transporteinheiten 13 solche Informationen auch direkt untereinander, insbesondere selbstorganisiert, austauschen. Eine Steuereinheit 55 könnte auch Teil der Recheneinheit 35 und/oder der Schnittstellen 15 sein.

Ferner kann das System 11 zur individuellen Anforderung von Waren ein Internetportal bzw. eine Internetschnittstelle 45 zur Bestellung und/oder Reservierung von Waren bzw. Kleidungsstücken 4 umfassen. Auch könnte über diese Schnittstelle bereits eine spezifische Umkleide 9 reserviert oder zugeteilt werden. Der Benutzer könnte sich zum Beispiel anhand eines Codes oder Logins in der Umkleidekabine mittels der Benutzerschnittstelle 15 identifizieren. Es ist ebenfalls möglich, dass die Benutzerschnittstelle 15 dazu ausgebildet ist mit einem mobilen Gerät (zum Beispiel ein Laptop, Mobiltelefon, Smartphone oder Tablet) zu kommunizieren, sodass ein Kunde sich über sein mobiles Gerät, insbesondere zum Beispiel über dessen Bildschirm oder Spracheingabemodul, identifizieren und/oder Ware aus dem Warenlager in die Umkleidekabine 9 anfordern kann. Auch eine Bezahlung mittels eines solchen mobilen Geräts wäre möglich. Es ist dabei nicht zwingend erforderlich, dass die Benutzerschnittstelle 15 selbst einen Bildschirm aufweist.

Optional kann das System 11 weitere Sensoren umfassen, wie zum Beispiel eine Türsensorik 25, welche die Öffnung der Tür einer Umkleidekabine steuert bzw. kontrolliert (beispielsweise mittels bzw. in Form von RFID, wie bereits zuvor beschrieben). Diese Sensorik 25 kann zum Informationsaustausch mit der zentralen Recheneinheit 35 und/oder der Benutzerschnittstelle 15 einer Umkleidekabine 9 ausgebildet sein. Dadurch kann zum Beispiel die Öffnung der Tür einer Umkleidekabine in Abhängigkeit von der Rückgabe oder des Erwerbs von Kleidungsstücken 4 erfolgen.

Schließlich kann das Logistiksystem 1 ebenfalls einen Kassenbereich bzw. Abholbereich 33 umfassen, an den durch das Schienennetz 12, 12' Kleidungsstücke 4 geliefert werden können, um dort bezahlt und/oder verpackt zu werden.

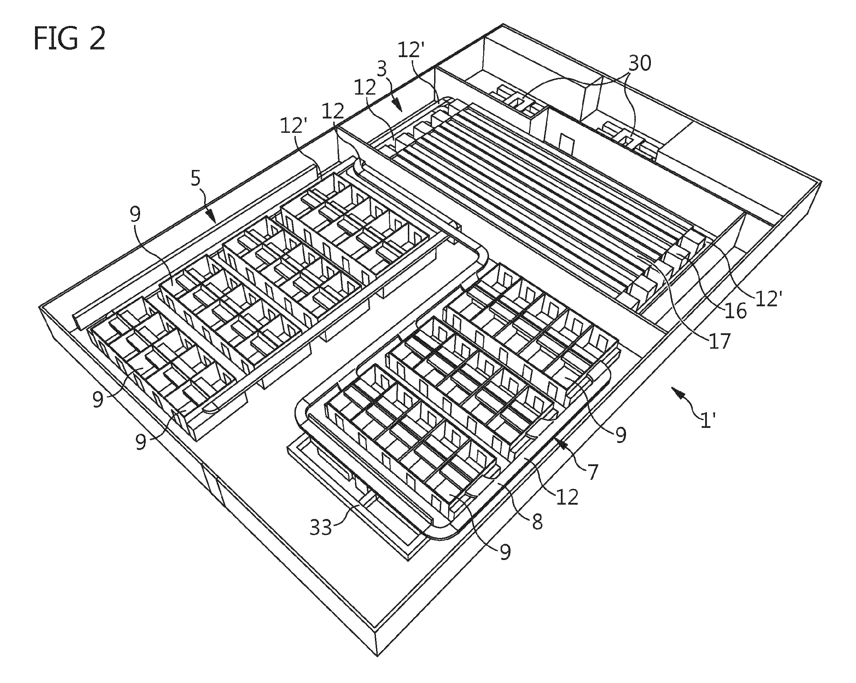

Die Figur 2 zeigt eine schematische, perspektivische Ansicht eines Logistiksystems 1' bzw. einer Modehausetage, welche ein Logistiksystem 1' gemäß einer erfindungsgemäßen Ausführungsform umfasst.

Wie bereits ähnlich in Bezug auf die Figur 1 beschrieben, umfasst das Logistiksystem 1' ein Warenlager 3 sowie einen davon getrennten Anprobebereich 5. Im Beispiel sind beide Bereiche 3, 5 mittels einer Wand voneinander abgetrennt. Somit können Personen nicht unmittelbar vom Anprobebereich 5 in das Warenlager 3 gelangen. Ein Durchgang könnte allerdings auch durch eine vorzugsweise gesicherte und/oder nur durch Personal zu öffnende Tür ermöglicht werden.

Das in der Figur 2 dargestellte Schienensystem umfasst ebenfalls zwei voneinander unabhängige Schienennetze 12, 12', die jeweils in einer Einhausung 8 geführt sind. Die Einhausungen 8 führen durch Öffnungen in der Wand zwischen dem Warenlager 3 und dem Anprobebereich 5, sodass in den Einhausungen 8 fahrende Transporteinheiten 13 Kleidungsstücke 4 und/oder diese Kleidungsstücke 4 beinhaltende Verpackungen 14 (nicht in Figur 2 dargestellt) zwischen den Umkleidekabinen 9 und dem Regalsystem 17 des Warenlagers 3 transportieren können. Im dargestellten Beispiel führen die Schienennetze 12, 12' in ihren Einhausungen 8 ebenfalls durch die Umkleidekabinen 9 hindurch. Bevorzugt sind die Einhausungen 8 dabei überkopf, das heißt insbesondere auf einer Höhe von mehr als 1,8 m, vorzugsweise mehr als 2,0 oder 2,1 m angeordnet.

Gemäß Figur 2 wird jeweils eine Gruppe von Umkleidekabinen 9 durch eines der Schienennetze 12, 12' versorgt. Jede Gruppe von Umkleidekabinen 9 besteht bevorzugt aus mehreren parallelen Reihen von Umkleidekabinen 9. Jede Reihe kann dabei beispielsweise zwischen drei und zehn Kabinen 9 umfassen. Es ist, wie dargestellt, ebenfalls möglich, dass zwei Reihen ihrer Länge nach aneinandergrenzen, wobei die Türen der Umkleidekabinen 9 der beiden Reihen voneinander weggerichtet sind. Es sind jedoch auch andere Anordnungen und Anzahlen von Umkleidekabinen 9 möglich. Ein Schienennetz 12, 12' kann im Bereich der Umkleidekabinen 9 bevorzugt parallel entlang und/oder durch die Reihen geführt sein. Insbesondere kann ein Schienennetz 12, 12' im Anprobebereich 5 mehrere parallelgeschaltete Streckenabschnitte aufweisen. Somit können sich Transporteinheiten 13 insbesondere im Bereich der Umkleiden ungestört voneinander bewegen. Ferner können eines oder mehrere der Schienennetze 12, 12' auch parallelgeschaltete Streckenabschnitte zur Verbindung des Anprobebereichs 5 mit dem Warenlager 3 aufweisen. Störungen im Schienennetz 12, 12' nahe einer Umkleidekabine 9 sind in der Regel weniger kritisch, da hiervon in der Regel nur wenige Umkleidekabinen 9 gleichzeitig betroffen wären.

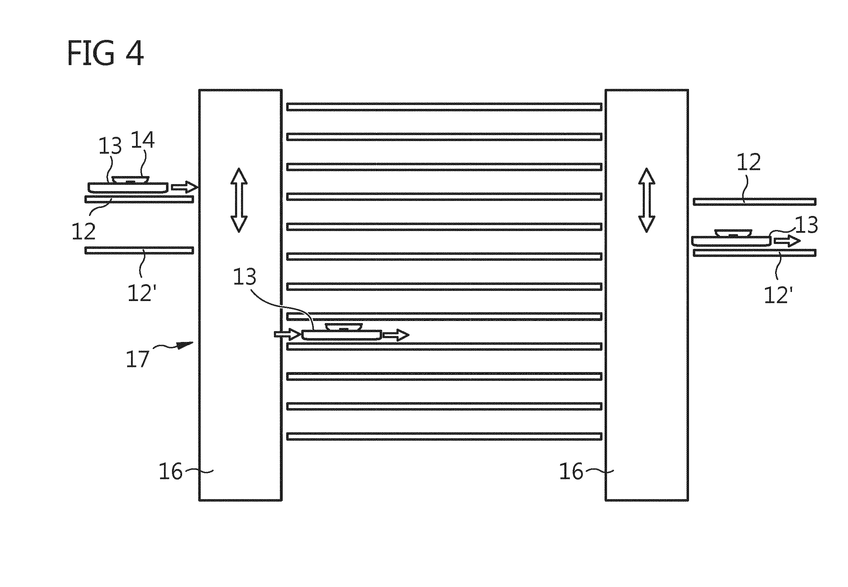

Schließlich umfasst das in der Figur 2 dargestellte Logistiksystem 1' einen Kassenbereich 33 sowie eine Falt- und Bügelstation 30. Diese Station kann ebenfalls über das Schienensystem bzw. die Netze 12, 12' durch die Transporteinheiten 13 angesteuert werden. Dies geschieht vorzugsweise bevor die Transporteinheiten 13 Kleidungsstücke 4 von einer Umkleidekabine 9 kommend in das Regalsystem 17 transportieren. Zum Erreichen verschiedener Ebenen von Regalen des Regalsystems 17 sind zum Beispiel Aufzüge 16 vorgesehen, in die die Transporteinheiten 13 sowohl regalseitig als auch schienennetzseitig einfahren können. Das Regalsystem 17 bzw. die Regale dieses Systems können ebenfalls Schienen bzw. Schienennetze aufweisen. Weitere Details zu einem Aufbau eines im Warenlager 3 befindlichen Regalsystems 17 sind in Bezug auf die Figur 4 beschrieben.

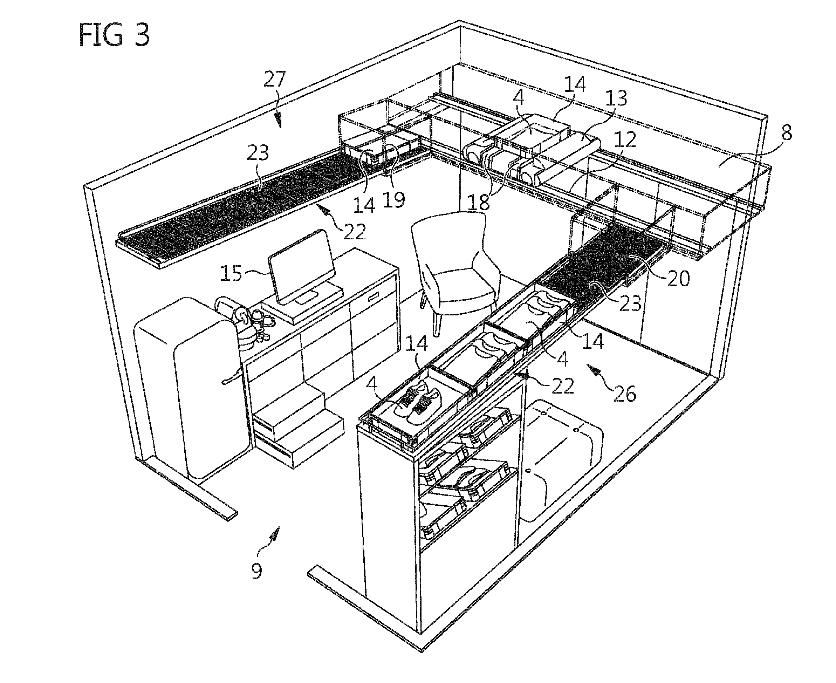

Die Figur 3 zeigt eine schematische perspektivische Ansicht einer Umkleidekabine 9 eines Logistiksystems. Diese Kabine 9 umfasst insbesondere eine Benutzerschnittstelle 15, zum Beispiel in Form eines Touchscreens. Alternativ oder zusätzlich kann diese Schnittstelle auch Mittel zur Spracherkennung und/oder zum Informationsaustausch mit einem mobilen Kommunikationsgerät eines Kunden umfassen (zum Beispiel mittels UMTS, HSDPA, WLAN und/oder Bluetooth). Im gezeigten Ausführungsbeispiel verläuft ein Streckenabschnitt des Schienennetzes 12 in einer Einhausung 8 durch die gezeigte Umkleidekabine 9 hindurch. Auf diesem Schienennetz 12 bewegt sich in der Darstellung ein mit einem Behälter 14 beladenes Transportshuttle 13 durch die Umkleidekabine 9. Transportshuttles 13 können bevorzugt elektrisch mittels eines Akkus angetrieben sein und sich zum Beispiel über elektrisch angetriebene Rollen auf den Schienen des Schienennetzes 12 selbsttätig bewegen. Bevorzugt transportieren die Shuttles 13 Behälter 14 (in diesem Fall eine Box 14), in denen sich ein oder mehrere Kleidungsstücke 4 befinden. Die Behälter 14 können von einem Shuttle 13 durch eine Öffnung 20 in einen Annahme-Pufferbereich 26, insbesondere auf einem Rollenteppich 23 abgelegt werden, um in einen Zugriffbereich 22 für den Kunden in der Umkleidekabine 9 zu gelangen. Dieser Transport bzw. die Übergabe zwischen dem Shuttle 13 und dem Zugriffbereich 22 kann mittels einer durch die Schwerkraft angetriebenen Bewegung der Behälter 14 auf dem Rollenteppich 23 erfolgen. Rollenteppiche 23 werden vorzugsweise im Wesentlichen quer zum durch die Umkleidekabine 9 laufenden Schienennetz 12 angeordnet. Andere Anordnungen sind jedoch ebenso möglich. Vom Shuttle 13 können die Behälter 14 bspw. durch ein Fördersystem 18 des Shuttles 13 abgelegt werden. Solche Shuttles sind an sich bereits erhältlich. Es können jedoch auch weitere Möglichkeiten genutzt werden, um Shuttles 13 zu be- oder entladen.

Umgekehrt kann die Umkleidekabine 9 wie dargestellt einen RückgabePufferbereich 27 umfassen, der bevorzugt ebenfalls einen Rollenteppich 23 aufweist. Dabei kann der Kunde einen Behälter 14 samt einem zurückzugebenen Kleidungstück 4 in einem Zugriffbereich 22 ablegen, wobei durch eine entsprechende Neigung des Rollenteppichs 23 des Rückgabe-Pufferbereichs 27 der Behälter 14 in Richtung einer Öffnung 19 befördert wird, um dort durch ein Shuttle 13 aufgenommen und abtransportiert zu werden.

Schließlich kann die Umkleidekabine 9 weiterhin mindestens eine Sitzgelegenheit, einen Spiegel, einen Heiß- und/oder Kaltgetränkeautomaten, ein Regal, einen Schrank, einen Kühlschrank, einen (weiteren) Bildschirm, einen Lautsprecher, einen Musikspieler, eine Tür und/oder Mittel zum Aufhängen oder Ablegen von Kleidungsstücken, eine Trennwand bei Mehrpersonenkabinen, etc. umfassen.

Die Figur 4 offenbart eine schematische Seitenansicht eines Regalsystems 17, das durch Schienennetze 12, 12' unterschiedlicher Höhe angelaufen wird. Sich auf den Schienennetzen 12, 12' bewegende Transportshuttles 13 können mittels Aufzügen bzw. Lifts 16 zwischen den einzelnen Ebenen (im Beispiel 12 Etagen) des Regalsystems 17 transportiert werden. Durch die Bereitstellung von Aufzügen 16 ist es ebenfalls möglich, dass Shuttles 13 zwischen den im Beispiel auf verschiedenen Höhen angeordneten Schienensystemen 12, 12' wechseln.

Die oben beschriebenen Ausführungsbeispiele dienen vor allem dem besseren Verständnis der Erfindung und sollten nicht einschränkend verstanden werden. Der Schutzumfang der vorliegenden Patentanmeldung ergibt sich aus den Patentansprüchen.

Die Merkmale der beschriebenen Ausführungsbeispiele können miteinander kombiniert oder gegeneinander ausgetauscht werden.

Ferner können die beschriebenen Merkmale durch den Fachmann an vorhandene Gegebenheiten oder vorliegende Anforderungen angepasst werden.

### Bezugszeichenliste

- 1: Logistiksystem
- 1': Logistiksystem
- 3: Warenlager
- 4: Kleidungsstück
- 5: Anprobebereich
- 7: Transportsystem
- 8: Einhausung
- 9: Umkleidekabine
- 11: System zur individuellen Anforderung von Waren
- 12: Schienennetz
- 12': Schienennetz
- 13: Transporteinheit
- 14: Verpackung / Behälter
- 15: Benutzerschnittstelle
- 16: Aufzug
- 17: Regalsystem
- 18: Fördersystem
- 19: Öffnung
- 20: Öffnung
- 22: Zugriffsbereich
- 23: Führungsmittel
- 25: Türsensorik
- 26: Annahme-Pufferbereich
- 27: Rückgabe-Pufferbereich
- 30: Falt-, Bügel- und/oder Prüfstation
- 33: Kassenbereich
- 35: Recheneinheit
- 45: Internetschnittstelle
- 55: Steuereinrichtung

## Patentansprüche

1. Ein Logistiksystem (1, 1') für einen Modeladen, umfassend:
ein Warenlager (3), umfassend eine Vielzahl von Kleidungsstücken (4);
einen Anprobebereich (5); und
ein Transportsystem (7) zum Transport von im Warenlager (3) befindlichen Kleidungsstücken (4) in den Anprobebereich (5),
**dadurch gekennzeichnet, dass**
der Anprobebereich (5) eine Vielzahl von Umkleidekabinen (9) umfasst,
das Logistiksystem ein System (11) zur individuellen Anforderung von einem oder mehreren Kleidungstücken (4) aus dem Warenlager (3) in eine der Umkleidekabinen (9) umfasst und
das Transportsystem (7) eine Vielzahl von automatisierten Transporteinheiten (13) umfasst zum Entnehmen der individuell angeforderten Kleidungsstücke (4) aus dem Warenlager und zu deren Transport in die Umkleidekabine (9), für welche die aus dem Warenlager (3) entnommenen Kleidungsstücke (4) angefordert wurden.

2. Das Logistiksystem (1, 1') gemäß Anspruch 1, wobei das Transportsystem (7) eine Vielzahl von selbstangetriebenen Transportshuttles oder -robotern (13) umfasst.

3. Das Logistiksystem (1, 1') gemäß Anspruch 1 oder 2, wobei das System (11) zur individuellen Anforderung von einem oder mehreren Kleidungstücken (4) in jeder Umkleidekabine (9) jeweils eine Benutzerschnittstelle (15) zur Anforderung von einem oder mehreren Kleidungsstücken (4) in diese Umkleidekabine (9) umfasst.

4. Das Logistiksystem (1, 1') gemäß einem der vorhergehenden Ansprüche, wobei das Transportsystem (7) derart ausgebildet ist, dass jede der Umkleidekabinen (9) individuell durch eine oder mehrere der Transporteinheiten (13) ansteuerbar ist.

5. Das Logistiksystem (1, 1') gemäß einem der vorhergehenden Ansprüche, wobei jedes der Kleidungsstücke (4) und/oder eine das jeweilige Kleidungsstück (4) beinhaltende Verpackung (14), insbesondere ein Behälter (14), durch einen individuellen Code gekennzeichnet ist, der zumindest einen der folgenden Parameter in Bezug auf das Kleidungsstück (4) umfasst: Größe, Farbangabe, Lagerungsort im Warenlager, Preis, Rabatt, Angaben zur Wasch- oder Reinigbarkeit, Hersteller, Marke, Garantie, Gewährleistung, Umtauschbarkeit, verfügbare weitere Größen, verfügbare weitere Farben.

6. Das Logistiksystem (1, 1') gemäß einem der vorhergehenden Ansprüche, wobei zumindest ein Teil der Kleidungsstücke (4) im Warenlager (3) in Behältern (14), insbesondere Boxen (14), aufbewahrt wird, die durch die Transporteinheiten (13) dem Warenlager (3) entnehmbar und transportierbar sind und in dem die Behälter (14) optional in mehrstöckigen Regalen eines Regalsystems (17) des Warenlagers (3) gelagert sind.

7. Das Logistiksystem (1, 1') gemäß einem der vorhergehenden Ansprüche, wobei das Transportsystem (7) ein Schienennetz (12) zum Führen der Transporteinheiten (13) umfasst.

8. Das Logistiksystem (1, 1') gemäß Anspruch 7, wobei das Schienennetz (12) zum Führen der Transporteinheiten (13) zumindest im Anprobebereich (5) oberhalb von 1,8 m, vorzugsweise oberhalb von 2,0 m oder unterirdisch angeordnet ist.

9. Das Logistiksystem (1, 1') gemäß einem der vorhergehenden Ansprüche, wobei das Logistiksystem (1, 1') in den Umkleidekabinen (9) jeweils mindestens eine Warenübergabeschnittstelle zum Be- und/oder Entladen der Transporteinheiten (13) umfasst.

10. Das Logistiksystem (1, 1') gemäß Anspruch 9, wobei die Warenübergabeschnittstelle mindestens eine Öffnung (19, 20) zum Be- und/oder Entladen von Transporteinheiten (13) umfasst, die oberhalb von 1,8 m, vorzugsweise oberhalb von 2,0 m angeordnet ist oder sich im Boden der jeweiligen Umkleidekabine (9) befindet.

11. Das Logistiksystem (1, 1') gemäß Anspruch 10, wobei die Warenübergabeschnittstelle Führungsmittel (23) zum Führen von Kleidungstücken (4) oder die Kleidungstücke (4) beinhaltende Verpackungen (14) zwischen der Öffnung (19, 20) und einem Zugriffsbereich (22) für Personen in der Umkleidekabine (9) umfasst.

12. Das Logistiksystem (1, 1') gemäß Anspruch 11, wobei die Führungsmittel (23) eines oder mehrere der folgenden Mittel umfassen:
eine Vielzahl von parallel zueinander und in einer schiefen Ebene angeordneten Rollen, sodass ein Kleidungsstück (4) oder eine das Kleidungsstück (4) beinhaltende Verpackung (14) entlang der schiefen Ebene auf den Rollen durch Schwerkraft angetrieben bewegbar ist;
ein Förderband;
einen Aufzug.

13. Das Logistiksystem (1, 1') gemäß einem der vorhergehenden Ansprüche, mit mindestens einem Pufferbereich (26, 27) für jede der Umkleidekabinen (9), in dem aus einer Umkleidekabine (9) an eine Transporteinheit (13) zurückzugegebene Kleidungsstücke (4) lagerbar sind, bevor sie wieder durch eine oder mehrere Transporteinheiten (13) an der Umkleidekabine (9) aufgenommen und abtransportiert werden, und/oder in den von einer oder mehreren Transporteinheiten (13) an eine Umkleidekabine (9) gelieferte Kleidungstücke (4) durch die Transporteinheiten (12) ablegbar und darin lagerbar sind.

14. Das Logistiksystem (1, 1') gemäß einem der vorhergehenden Ansprüche,
wobei die Kleidungsstücke (4) und/oder deren Verpackung (14) jeweils durch einen Code individuell gekennzeichnet sind und das Logistiksystem (1, 1') und/oder die Umkleidekabinen (9) eine Sensorik (25), insbesondere basierend auf RFID oder Kaba umfassen, zur automatischen Entriegelung einer Tür einer Umkleidekabine (9), wenn entweder alle sich in dieser Umkleidekabine (9) befindlichen Kleidungsstücke (4) bezahlt wurden oder durch eine Person in dieser Umkleidekabine (9) signalisiert wurde, dass sie die Anprobe abgeschlossen hat, und zum Geschlossenhalten der Tür solange sich noch unbezahlte Kleidungsstücke (4) in dieser Umkleidekabine (9) befinden oder die Person in dieser Umkleidekabine (9) noch nicht signalisiert hat, dass sie die Anprobe abgeschlossen hat.

15. Ein Modeladen umfassend das Logistiksystem (1, 1') gemäß einem der vorhergehenden Ansprüche.

## Geänderte Patentansprüche

### Geänderte Patentansprüche gemäss Regel 137(2) EPÜ.

1. Ein Logistiksystem (1, 1') für einen Modeladen, umfassend:
ein Warenlager (3), umfassend eine Vielzahl von Kleidungsstücken (4);
einen Anprobebereich (5); und
ein Transportsystem (7) zum Transport von im Warenlager (3) befindlichen Kleidungsstücken (4) in den Anprobebereich (5),
**dadurch gekennzeichnet, dass**
der Anprobebereich (5) eine Vielzahl von Umkleidekabinen (9) umfasst,
das Logistiksystem ein System (11) zur individuellen Anforderung von einem oder mehreren Kleidungstücken (4) aus dem Warenlager (3) in eine der Umkleidekabinen (9) umfasst, wobei das System (11) zur individuellen Anforderung von einem oder mehreren Kleidungsstücken (4) in jeder Umkleidekabine (9) jeweils eine oder mehrere Benutzerschnittstellen (15) zur Anforderung von einem oder mehreren Kleidungsstücken (4) in diese Umkleidekabine (9) umfasst, und
das Transportsystem (7) eine Vielzahl von automatisierten Transporteinheiten (13) umfasst zum Entnehmen der individuell angeforderten Kleidungsstücke (4) aus dem Warenlager und zu deren Transport in die Umkleidekabine (9), für welche die aus dem Warenlager (3) entnommenen Kleidungsstücke (4) angefordert wurden, wobei zumindest ein Teil der Kleidungsstücke (4) im Warenlager (3) in Behältern (14) aufbewahrt sind, wobei die Behälter (14) durch die automatisierten Transporteinheiten (13) dem Warenlager (3) entnehmbar und zu einer Umkleide (9) transportierbar sind, und
wobei die mindestens eine Benutzerschnittstelle (15) mit einer Steuereinheit (55) zum Übermitteln einer durch die Benutzerschnittstelle (15) angeforderten Kleidungsstückliste an eine oder mehrere Transporteinheiten (13) verbunden ist, wobei die Transporteinheiten (13) Befehle von der Steuereinheit (55) erhalten können und dann die Transporteinheiten (13) Kleidungsstücke (4) selbsttätig aus dem Warenlager (3) entnehmen und zur anfordernden Umkleidekabine (9) transportieren können.

2. Das Logistiksystem (1, 1') gemäß Anspruch 1, wobei das Transportsystem (7) eine Vielzahl von automatisierten Transporteinheiten (13) als selbstangetriebenen Transportshuttles oder -Transportroboter umfasst.

3. Das Logistiksystem (1, 1') gemäß einem der vorhergehenden Ansprüche, wobei das Transportsystem (7) derart ausgebildet ist, dass jede der Umkleidekabinen (9) individuell durch eine oder mehrere der Transporteinheiten (13) ansteuerbar ist.

4. Das Logistiksystem (1, 1') gemäß einem der vorhergehenden Ansprüche, wobei jedes der Kleidungsstücke (4) und/oder eine das jeweilige Kleidungsstück (4) beinhaltende Verpackung (14), insbesondere ein Behälter (14), durch einen individuellen Code gekennzeichnet ist, der zumindest einen der folgenden Parameter in Bezug auf das Kleidungsstück (4) umfasst: Größe, Farbangabe, Lagerungsort im Warenlager, Preis, Rabatt, Angaben zur Wasch- oder Reinigbarkeit, Hersteller, Marke, Garantie, Gewährleistung, Umtauschbarkeit, verfügbare weitere Größen, verfügbare weitere Farben.

5. Das Logistiksystem (1, 1') gemäß einem der vorhergehenden Ansprüche, wobei
die Behälter (14) optional in mehrstöckigen Regalen eines Regalsystems (17) des Warenlagers (3) gelagert sind.

6. Das Logistiksystem (1, 1') gemäß einem der vorhergehenden Ansprüche, wobei das Transportsystem (7) ein Schienennetz (12) zum Führen der Transporteinheiten (13) umfasst.

7. Das Logistiksystem (1, 1') gemäß Anspruch 6, wobei das Schienennetz (12) zum Führen der Transporteinheiten (13) zumindest im Anprobebereich (5) oberhalb von 1,8 m, vorzugsweise oberhalb von 2,0 m oder unterirdisch angeordnet ist.

8. Das Logistiksystem (1, 1') gemäß einem der vorhergehenden Ansprüche, wobei das Logistiksystem (1, 1') in den Umkleidekabinen (9) jeweils mindestens eine Warenübergabeschnittstelle zum Be- und/oder Entladen der Transporteinheiten (13) umfasst.

9. Das Logistiksystem (1, 1') gemäß Anspruch 8, wobei die Warenübergabeschnittstelle mindestens eine Öffnung (19, 20) zum Be- und/oder Entladen von Transporteinheiten (13) umfasst, die oberhalb von 1,8 m, vorzugsweise oberhalb von 2,0 m angeordnet ist oder sich im Boden der jeweiligen Umkleidekabine (9) befindet.

10. Das Logistiksystem (1, 1') gemäß Anspruch 9, wobei die Warenübergabeschnittstelle Führungsmittel (23) zum Führen von Kleidungstücken (4) oder die Kleidungstücke (4) beinhaltende Verpackungen (14) zwischen der Öffnung (19, 20) und einem Zugriffsbereich (22) für Personen in der Umkleidekabine (9) umfasst.

11. Das Logistiksystem (1, 1') gemäß Anspruch 10, wobei die Führungsmittel (23) eines oder mehrere der folgenden Mittel umfassen:
eine Vielzahl von parallel zueinander und in einer schiefen Ebene angeordneten Rollen, sodass ein Kleidungsstück (4) oder eine das Kleidungsstück (4) beinhaltende Verpackung (14) entlang der schiefen Ebene auf den Rollen durch Schwerkraft angetrieben bewegbar ist;
ein Förderband;
einen Aufzug.

12. Das Logistiksystem (1, 1') gemäß einem der vorhergehenden Ansprüche, mit mindestens einem Pufferbereich (26, 27) für jede der Umkleidekabinen (9), in dem aus einer Umkleidekabine (9) an eine Transporteinheit (13) zurückzugegebene Kleidungsstücke (4) lagerbar sind, bevor sie wieder durch eine oder mehrere Transporteinheiten (13) an der Umkleidekabine (9) aufgenommen und abtransportiert werden, und/oder in den von einer oder mehreren Transporteinheiten (13) an eine Umkleidekabine (9) gelieferte Kleidungstücke (4) durch die Transporteinheiten (12) ablegbar und darin lagerbar sind.

13. Das Logistiksystem (1, 1') gemäß einem der vorhergehenden Ansprüche,
wobei die Kleidungsstücke (4) und/oder deren Verpackung (14) jeweils durch einen Code individuell gekennzeichnet sind und das Logistiksystem (1, 1') und/oder die Umkleidekabinen (9) eine Sensorik (25), insbesondere basierend auf RFID oder Kaba umfassen, zur automatischen Entriegelung einer Tür einer Umkleidekabine (9), wenn entweder alle sich in dieser Umkleidekabine (9) befindlichen Kleidungsstücke (4) bezahlt wurden oder durch eine Person in dieser Umkleidekabine (9) signalisiert wurde, dass sie die Anprobe abgeschlossen hat, und zum Geschlossenhalten der Tür solange sich noch unbezahlte Kleidungsstücke (4) in dieser Umkleidekabine (9) befinden oder die Person in dieser Umkleidekabine (9) noch nicht signalisiert hat, dass sie die Anprobe abgeschlossen hat.

14. Ein Modeladen umfassend das Logistiksystem (1, 1') gemäß einem der vorhergehenden Ansprüche.
